# EUROPEAN PATENT APPLICATION

(11) **EP 1 837 559 A1**
(43) Date of publication of application: **26.09.2007**
(21) Application number: 06425180.4
(22) Date of filing: 17.03.2006
(51) Int. Cl.: F16H 57/02

(54) **System for assembling transmission bearings**

(71) Applicant: ELASIS - Società Consortile per Azioni, 80038 Pomigliano d'Arco (IT)
(72) Inventor: Di Martino, Alessandro, 80038 Pomigliano d'Arco Via Ex Aeroporto (IT)
(74) Representative: Jorio, Paolo

(57) **Abstract**

A transmission (1), in particular for motor vehicles, has a casing (3), and at least one bearing (7) for connecting an axial end (10) of a transmission shaft (4) in axially rotating manner to the casing (3); a fastening system (25) is provided to lock the outer ring (12) of the bearing (7) axially in at least one direction with respect to the casing (3); the fastening system has a locating plate (25) housed inside the casing (3), and which is radially loose with respect to the transmission shaft (4) and rests axially against the outer ring (12); and a number of pins (22) are fitted in fixed positions to the locating plate (25), and extend through respective holes (18) formed in the casing (3) to screw respective nuts (40) onto the pins.

## Description

The present invention relates to a system for assembling transmission bearings.

As is known, in motor vehicle transmissions, two or more parallel transmission shafts are connected by ball bearings to a normally cast casing housing the gearing on the transmission shafts and filled with oil to lubricate the gearing.

To position the outer rings of the ball bearings axially and absorb the loads transmitted by the transmission shafts to the casing, a steel (or aluminium) locating plate is normally fitted outside the casing, rests axially on the outer rings, and has holes coaxial with respective openings formed in the end of the casing and fitted through with the transmission shafts. The locating plate is fixed to the casing by screws, and, once the screws are tightened, the end of the casing is closed by a sheet metal cover fixed to the casing by further screws.

Two mating or interface areas are thus formed - one where the sheet metal cover rests on the locating plate, and another where the locating plate rests on the casing - where lubricating oil leakage from the casing may occur if the parts are not sealed and/or the screws not tightened properly.

A need is felt to reduce the risk of lubricating oil leakage and, preferably, the number of parts required to lock the outer rings of the ball bearings axially with respect to the transmission casing.

It is an object of the present invention to provide a system for assembling transmission bearings, designed to meet the above requirements in a straightforward, low-cost manner.

According to the present invention, there is provided a transmission, in particular for motor vehicles, comprising:
- a casing;
- at least two transmission shafts having parallel axes and supporting respective gears housed in said casing;
- at least one bearing fitted to an axial end of a said transmission shaft and comprising an outer ring fixed angularly with respect to said casing and rotating axially with respect to said transmission shaft;
- fastening means for locking said outer ring axially in at least one direction with respect to said casing; said fastening means comprising:
   a) an axial locating member partly facing a portion of said casing and radially loose with respect to said transmission shaft; and
   b) tightening means for securing said locating member axially against said outer ring;
characterized in that said locating member is housed inside said casing; and in that said tightening means comprise a number of pins fitted in fixed positions to said locating member and extending through respective holes formed in said casing.

Preferably, said pins project outside said casing; said tightening means comprising, for each said pin, a tightening member located outside said casing and fitted to the relative pin; and said pins and said tightening members being connected by a threaded connection.

More specifically, the locating member is defined by a plate comprising:
- an annular locating portion resting axially against said outer ring and defining a through opening fitted through axially with said transmission shaft; and
- a fastening portion surrounding said annular locating portion; said pins terminating with respective end portions connected integrally to said fastening portion.

Said casing conveniently comprises an end portion facing and enclosing said bearing and said axial end of said transmission shaft.

A preferred, non-limiting embodiment of the present invention will be described by way of example with reference to the accompanying drawings, in which:
Figure 1 shows a cross section of a preferred embodiment of the transmission bearing assembly system according to the present invention;
Figure 2 shows a larger-scale cross section of a variation of the Figure 1 system;
Figure 3 shows a view in perspective, with parts removed for clarity, of the Figure 2 transmission.

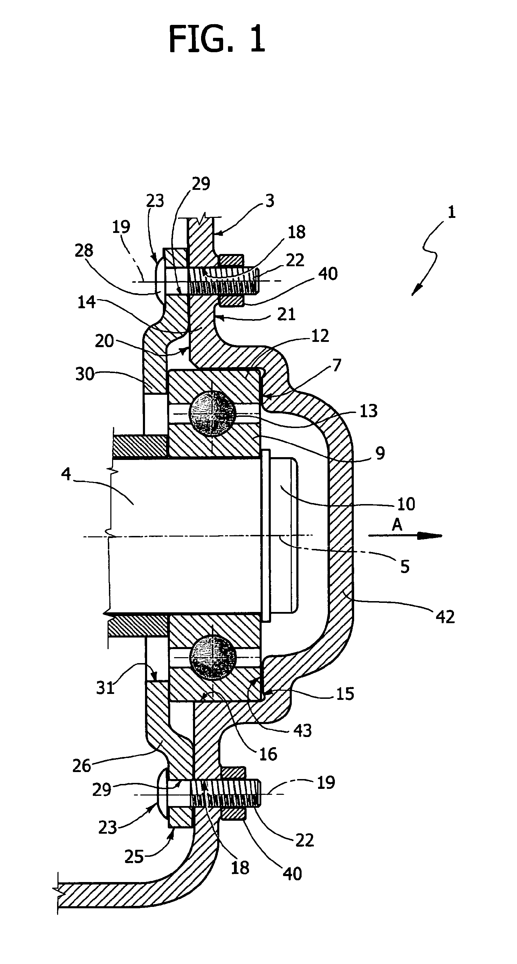

Number 1 in Figure 1 indicates as a whole a motor vehicle transmission (shown partly). Transmission 1 comprises a cast metal casing 3 (shown partly) housing two transmission shafts 4, only one of which is shown. One of the transmission shafts is a primary or drive shaft, and the other a secondary or driven shaft.

Shafts 4 have parallel axes 5, and support respective gears (not shown) housed inside casing 3 and which mesh to define a number of gear ratios or gears selectable and engageable by the driver of the vehicle.

Shafts 4 are connected in axially rotating manner to casing 3 by rolling bearings, one of which is shown in Figure 1 and indicated by reference number 7.

Bearing 7 comprises an inner ring 9 fitted to an axial end 10 of shaft 4 and secured in a fixed position in known manner not described in detail; and an outer ring 12 fitted in axially rotating manner to ring 9 by balls 13 and connected to a portion 14 of casing 3.

Portion 14 has a dead opening 15 engaged by end 10 and defining an inner cylindrical surface 16, to which ring 12 is fitted in an angularly fixed position.

Portion 14 has a number of through holes 18, which are formed about opening 15 along respective axes 19 parallel to axis 5, come out axially through an inner face 20 and an outer face 21 of portion 14, and are engaged radially loosely by respective stems or pins 22 forming part of respective screws 23.

Screws 23 extend along axes 19 from a plate 25 housed inside casing 3, and project beyond face 21.

Plate 25 comprises an outer fastening portion 26, which faces face 20, is made integral with, e.g. welded to, the heads 28 of screws 23, and has a number of holes 29, each engaged by the initial portion of a relative stem 22. Plate 25 also comprises an inner annular locating and/or forcing portion 30, which is surrounded by portion 26, rests axially against ring 12, and defines a circular opening 31 coaxial with opening 15 and fitted through radially loosely with shaft 4.

To close opening 15 axially, the casing comprises an end portion 42 formed in one piece with portion 14 and facing end 10.

Bearing 7 is locked axially, outwards of casing 3 in the direction indicated by arrow A, by ring 12 resting axially against a shoulder 43 defined by portion 42.

To lock ring 12 axially in the opposite direction, nuts 40 are screwed onto the outer ends of stems 22 and tightened onto face 21 to draw plate 25 axially towards face 20 into a fixed position. In other words, ring 12 is gripped axially between shoulder 43 and portion 30 by tightening nuts 40 onto screws 23.

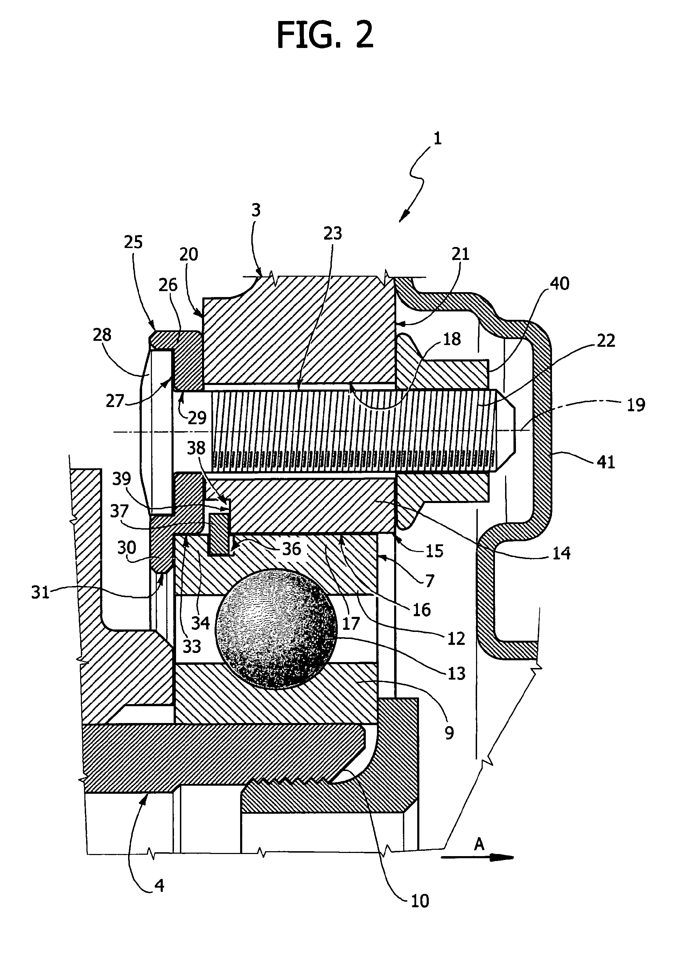

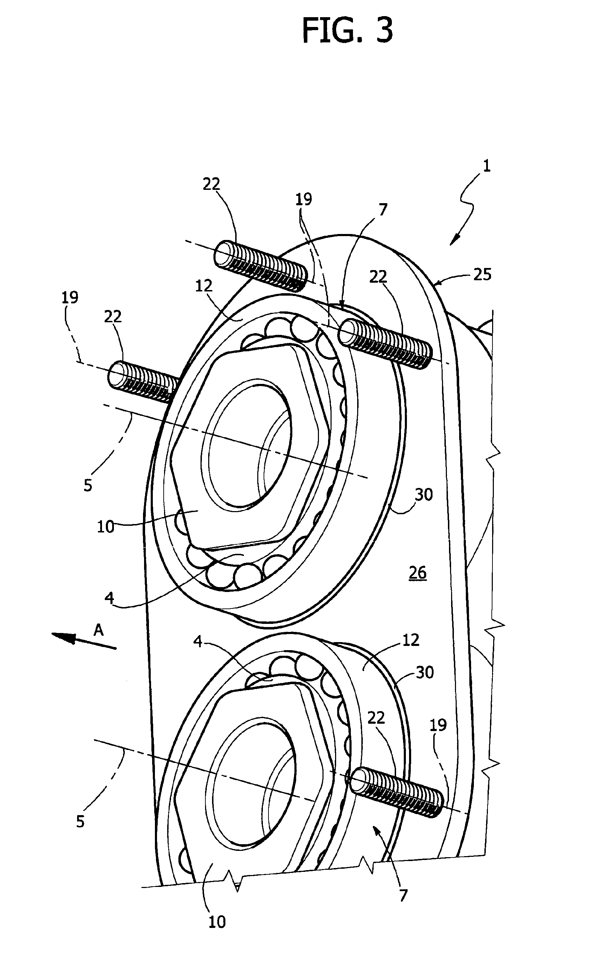

In the Figure 2 and 3 variation, the component parts of transmission 1 and the assembly system are indicated, where possible, using the same reference numbers as in Figure 1.

As shown in Figure 3, plate 25 is fitted to both transmission shafts 4 of transmission 1, and has two circular openings 31 coaxial with respective openings 15, which are formed through casing 3 and engaged by respective bearings 7.

With reference to Figure 2, plate 25 defines a seat 27 housing heads 28 of screws 23, and, for each opening 31, has an inner cylindrical locating surface 33 connecting the corresponding portion 30 and portion 26, and mating with an end portion 34 of corresponding ring 12.

Each ring 12 also comprises an end portion 17 at the opposite axial end to portion 34 and mating in an angularly fixed position with surface 16 of corresponding opening 15.

Portions 17 and 34 of each ring 12 are separated axially by a circular groove 36 engaged by a respective axial locating ring 37. And ring 37 of each bearing 7 rests axially against portion 34, projects radially from groove 36 to engage an annular recess 38 formed in portion 14, on the edge between face 20 and surface 16, and rests axially against a shoulder 39 of portion 14 defining recess 38.

Ring 37 resting axially on portion 34, on one side, and on shoulder 39, on the other side, locks ring 12 axially in the direction indicated by arrow A; and nuts 40 lock ring 12 axially in the opposite direction by gripping portion 34 of bearing 7 between shoulder 39 and portion 30.

Finally, with reference to Figure 2, transmission 1 comprises a sheet metal cover 41 (shown partly) fixed, e.g. removably by means of screws (not shown), to the outside of casing 3, i.e. on the side facing face 21, and facing axial ends 10 of shafts 4 to close the space housing nuts 40, bearings 7, and ends 10.

At assembly, transmission shafts 4, their gears, and bearings 7 form a preassembled unit, which is inserted axially downwards inside casing 3 in the direction indicated by arrow A. Plate 25 also forms part of the unit, i.e. is preassembled, albeit loosely, to shafts 4 in an intermediate axial position between bearings 7 and the gears. Fitting plate 25 about both shafts 4 (Figure 3) prevents plate 25 from rotating completely, and so establishes an angular position with respect to shafts 4.

Towards the end of axial insertion of the unit inside casing 3, pins 22, integral with plate 25, engage respective holes 18, by virtue of the unit being inserted downwards. Slight, easy angular adjustment of the unit with respect to casing 3 may be required.

Insertion of the unit is completed upon ring 12 of each bearing 7 coming to rest axially directly on shoulder 43 - in the Figure 1 solution - or on shoulder 39 with the interposition of ring 37 - in the Figure 2 and 3 solution. At this point, stems 22 of screws 23 project axially outwards of casing 3 from respective holes 18, so that respective nuts 40 can be tightened working from the underside of casing 3 defined by face 21.

By tightening nuts 40, plate 25 is held resting axially against rings 12.

More specifically, portions 34 are gripped between plate 25 and shoulder 39 or 43.

The interface or mating areas through which lubricating oil may leak from casing 3 are therefore defined solely by the connection of cover 41 to casing 3, in the Figure 2 and 3 solution, or are nonexistent, as in the Figure 1 solution.

Moreover, in the Figure 1 embodiment, ring 12 is locked axially, while at the same time eliminating cover 41 and so reducing the number of component parts, and potential oil leakage is restricted to holes 18 of pins 22 fixed to plate 25, where it can be prevented by simply using O-rings (rubber sealing rings) not shown.

The above advantages are achieved using plate 25, with pins 22 fixed to it, inside casing 3 as opposed to outside, as in conventional solutions. Drawing plate 25 onto rings 12 on the inside of casing 3 ensures correct axial positioning of bearings 7. More specifically, rings 12 are gripped axially, and so positioned precisely, between casing 3 and plate 25.

More specifically, the way in which plate 25 is fastened, by "exerting pull" on screws 23 from the outside by means of nuts 40, is relatively straightforward.

Clearly, changes may be made to transmission 1 as described and illustrated herein without, however, departing from the scope of the present invention, as defined in the accompanying Claims.

In particular, plate 25 may be used for only one of bearings 7; and/or plate 25 may be replaced by a different type of locating member, possibly comprising two or more parts; and/or traction may be exerted on pins 22 using other than the threaded connection of nuts 40.

## Claims

1. A transmission (1), in particular for motor vehicles, comprising:
- a casing (3);
- at least two transmission shafts (4) having parallel axes (5) and supporting respective gears housed in said casing (3);
- at least one bearing (7) fitted to an axial end (10) of a said transmission shaft (4) and comprising an outer ring (12) fixed angularly with respect to said casing (3) and rotating axially with respect to said transmission shaft (4);
- fastening means (25, 23, 40) for locking said outer ring (12) axially in at least one direction with respect to said casing (3); said fastening means comprising:
a) an axial locating member (25) partly facing a portion (14) of said casing (3) and radially loose with respect to said transmission shaft (4); and
b) tightening means (23, 40) for securing said locating member (25) axially against said outer ring (12);
**characterized in that** said locating member (25) is housed inside said casing (3); and **in that** said tightening means (23, 40) comprise a number of pins (22) fitted in fixed positions to said locating member (25) and extending through respective holes (18) formed in said casing (3).

2. A transmission as claimed in Claim 1, **characterized in that** said pins (22) project outside said casing (3); and **in that** said tightening means (23, 40) comprise, for each said pin (22), a tightening member (40) located outside said casing (3) and fitted to the relative pin (22).

3. A transmission as claimed in Claim 2, **characterized in that** said pins (22) and said tightening members (40) are connected by a threaded connection.

4. A transmission as claimed in any one of the foregoing Claims, **characterized in that** said locating member (25) is defined by a plate comprising:
- an annular locating portion (30) resting axially against said outer ring (12) and defining a through opening (15) fitted through axially with said transmission shaft (4); and
- a fastening portion (26) surrounding said annular locating portion (30); said pins (22) terminating with respective end portions (28) connected integrally to said fastening portion (26).

5. A transmission as claimed in any one of the foregoing Claims, **characterized in that** said casing (3) comprises an annular locating surface (39, 43) for locking said outer ring (12) axially in the opposite direction (A); said outer ring (12) comprising an axially gripped portion (34) gripped axially, by the action of said tightening means (23, 40), between said locating member (25) and said annular locating surface (39, 43).

6. A transmission as claimed in Claim 5, **characterized by** comprising a locating ring (37) interposed axially between said annular locating surface (39) and said axially gripped portion (34), and engaging a circular groove (39) formed radially in said outer ring (12).

7. A transmission as claimed in any one of the foregoing Claims, **characterized in that** said casing (3) comprises an end portion (42) facing and enclosing said bearing (7) and said axial end (10) of said transmission shaft (4).

8. A transmission as claimed in Claims 5 and 7, **characterized in that** said annular locating surface (43) is defined by said end portion (42) of said casing (3).
